# EUROPÄISCHE PATENTSCHRIFT

(11) **EP 3 331 340 B1**
(45) Veröffentlichungstag und Bekanntmachung des Hinweises auf die Patenterteilung: **21.12.2022**
(21) Anmeldenummer: 16754177.0
(22) Anmeldetag: 22.07.2016
(51) Int. Cl.: A01B 63/112

(54) **DREIPUNKTAUFHÄNGUNG**
THREE-POINT LINKAGE
ATTELAGE TROIS POINTS

(30) Priorität: 04.08.2015 DE 102015214855
(43) Veröffentlichungstag der Anmeldung: 13.06.2018
(73) Patentinhaber: Schaeffler Technologies AG & Co. KG, 91074 Herzogenaurach (DE)
(72) Erfinder: BERESCH, Eduard, 97447 Gerolzhofen (DE); BREHM, Horst, 96120 Bischberg (DE); GERNER, Armin, 96178 Pommersfelden (DE); WITTMANN, Bernd, 96178 Pommersfelden (DE); HEIM, Jens, 97493 Bergrheinfeld (DE); GIERL, Jürgen, 91052 Erlangen (DE)
(86) Internationale Anmeldenummer: PCT/DE2016/200338
(87) Internationale Veröffentlichungsnummer: WO 2017/020904

(56) Entgegenhaltungen:
- EP-A2- 0 341 459
- EP-A2- 1 821 090
- AT-B- 372 813
- DE-A1- 19 639 573
- DE-A1-102012 216 306
- US-A- 4 858 475
- US-A- 5 682 954

## Beschreibung

Die Erfindung betrifft eine Dreipunktaufhängung, insbesondere für einen Traktor, eine fahrbare Arbeitsmaschine, eine Baumaschine, einen Kran oder dergleichen, die zum Ankuppeln eines Anbaugeräts ausgebildet ist und wenigstens eine Lagerstelle mit einem Lagerbolzen aufweist, welcher in einem Hohlraum ein Messelement mit mehreren Sensoren umfasst, deren Sensorsignal ein Maß für eine an der Lagerstelle angreifende Kraft ist.

Eine Dreipunktaufhängung, die auch als Dreipunkt-Kraftheber oder Dreipunkt-Hydraulik bezeichnet wird, ist eine zumeist hydraulisch angetriebene Vorrichtung an einer fahrbaren Arbeitsmaschine, insbesondere an einem Traktor, um ein Anbaugerät oder ein Arbeitsgerät anzukuppeln und anzuheben. Die Dreipunkt-Aufhängung kann sowohl an der Rückseite der fahrbaren Arbeitsmaschine, insbesondere des Traktors, als auch an der Vorderseite angebracht sein. Bei einer standardisierten DreipunktAufhängung sind drei Lagerstellen vorhanden, an denen das Anbaugerät befestigt ist. Üblicherweise umfasst eine Dreipunkt-Aufhängung zwei tief am Heck des Traktors angebrachte Hebel, die als Unterlenker bezeichnet werden sowie einen zentralen Oberlenker. Die Unterlenker können direkt oder über einen Hebel durch Hydraulikzylinder angehoben werden. Dem Oberlenker ist ebenfalls ein Hydraulikzylinder zugeordnet, durch dessen Längenänderung eine Neigung des Anbaugeräts eingestellt werden kann. Die Befestigungspunkte des Oberlenkers und der Unterlenker sind häufig als Fanghaken ausgebildet, um ein schnelles Ankoppeln oder Abkoppeln eines Anbaugeräts zu ermöglichen. Ein Anbaugerät weist zumeist einen sogenannten A-Rahmen auf, an dem die Fanghaken eingehängt werden. Es ist bekannt, bei einer Dreipunktaufhängung an einem Gelenk einen einen Sensor aufweisenden Lagerbolzen einzusetzen, insbesondere einen Kraftmessbolzen. Ein derartiger Kraftmessbolzen umfasst ein Sensorelement, das zum Beispiel auf dem magnetoelastischen Messprinzip basieren kann. Das Sensorelement umfasst eine Primärspule, die ein Magnetfeld erzeugt. Wenn der Kraftmessbolzen durch eine Zugkraft oder eine Drucckraft beaufschlagt wird, verändern sich die magnetischen Eigenschaften des Materials, wodurch das Magnetfeld verändert wird. Diese Veränderung kann gemessen werden und ist ein Maß für die angreifende Kraft.

Allerdings treten in der Praxis, wenn ein derartiger Kraftmessbolzen bei einer Dreipunktaufhängung verwendet wird, Probleme auf. Ein Nachteil ist, dass derartige Kraftsensoren eine gewisse Temperaturabhängigkeit aufweisen. Bei einer Temperaturänderung ändern sich auch die Materialeigenschaften und somit auch das Magnetfeld des Kraftmessbolzens. Eine Auswerteelektronik kann nicht unterscheiden, ob die Magnetfeldänderung auf einer Temperaturänderung oder auf einer Änderung der mechanischen Kräfte oder Spannungen beruht. Noch schwieriger wird die Auswertung von Sensorsignalen, wenn zum Beispiel eine Spule des Kraftsensors und der die Spule umgebende Lagerbolzen aus unterschiedlichen Werkstoffen bestehen, die unterschiedliche Ausdehnungskoeffizienten aufweisen.

DE 196 39 573 A1 beschreibt ein landwirtschaftliches Arbeitsfahrzeug mit einem Dreipunktgestänge zum Anlenken eines Anbaugeräts mit einer Verstelleinrichtung, welches zum Betätigen eines Hubwerks eine elektrohydraulische Hubwerks- Regeleinrichtung aufweist, die zur Ermittlung der Längskräfte in den zwei Unterlenkern des Dreipunktgestänges Messwertgeber aufweist und Mittel, um die Verstelleinrichtung entsprechend der Messwerte zu betätigen.

In der EP 0 341 459 A2 ist eine landwirtschaftlich nutzbare Zugmaschine beschrieben mit einem Anbaugerät und einem zur Bewegung des Anbaugeräts dienenden Kraftheber mit einem die Signale erzeugenden Kraftsensor und eine auf die Signale ansprechende Regeleinrichtung.

DE102012216306 A1 beschreibt Verfahren zum Bestimmen einer Beladung einer Arbeitsmaschine, wobei die Arbeitsmaschine ein Hubwerk mit einem Kraftsensor aufweist, der ausgebildet ist, um eine in dem oder an dem Hubwerk wirkende Kraft zu erfassen, die von einer Beladung des Hubwerks abhängt.

EP 1 821 090 A2 offenbart einen Kraftsensor, beispielsweise als Gelenkbolzen in einem Ackerschlepper. Der Kraftsensor befindet sich in einem zylinderförmigen Gehäuse, das durch eine senkrecht zu seiner Mittelachse auf es einwirkende Kraft elastisch verformbar ist und einen Hohlraum mit einer Messwandleranordnung aufweist, mit der die Verformung des Gehäuses erfassbar ist. Dabei weist die Messwandleranordnung eine scheibenförmige Trägerplatte mit befestigtem Dehnmesswandler auf und die Trägerplatte ist derart im Hohlraum befestigt, dass sich eine Verformung des Gehäuses auf die Trägerplatte überträgt.

US 4 858 475 A zeigt einen Bolzen mit einem Messelement, welches verschiede Formen aufweisen kann und in einen Hohlraum des Bolzens eingeführt wird. Das Messelement wird an seiner Mantelfläche lokal mit Sensoren versehen. Die unterschiedlich geformten Messelemente haben gemein, dass sie lokal zur Innenfläche des Bolzens beabstandet sind.

In US 5 682 954 A ist eine Dreipunktaufhängung gezeigt, die einen Bolzen mit einem Sensor aufweist, der so konfiguriert ist, dass er ein Signal aus dem Lastzustand des Bolzens erzeugt und an die Betätigungseinrichtung übermittelt.

AT 372 813 B beschreibt einen Lagerbolzen als Messwertgeber, der in einer Axialbohrung eine Messeinrichtung aufnimmt, wobei der Bolzen einen zur Drehsicherung anschraubbaren Radialarm trägt und elektrische Leitungen über eine Bolzenquerbohrung und eine Längsausnehmung im Radialarm nach außen geführt sind.

Probleme bereitet auch das Erfassen eines "Nullpunkts", das heißt eines kraftfreien Zustands bei Kraftsensoren. Da herkömmliche Lagerbolzen, die als Kraftsensoren dienen, im Inneren des Bolzens angeordnet sind, verbleibt lediglich eine vergleichsweise geringe Wandstärke für den rohrförmigen Bolzen. Falls während des Betriebs eine plastische Verformung des Lagerbolzens eintritt, beispielsweise durch eine kurzzeitige Überlastung, so würde das Sensorsignal anzeigen, dass eine Last, das heißt eine wirkende Kraft, vorhanden ist, obwohl tatsächlich ein lastfreier Zustand vorliegt.

Der Erfindung liegt daher die Aufgabe zu Grunde eine Dreipunktaufhängung anzugeben, die eine robuste und störungsfreie Erfassung einer angreifenden Kraft ermöglicht.

Zur Lösung dieser Aufgabe ist bei einer Dreipunktaufhängung vorgesehen, die zum Ankuppeln eines Anbaugeräts ausgebildet ist, dass sie wenigstens eine Lagerstelle aufweist mit einem Lagerbolzen in Form eines zylindrischen Bolzens umfassend einen Hohlraum und mit einem in dem Hohlraum angeordneten zylindrischen Messelement, das mehrere Sensoren aufweist, deren Sensorsignal ein Maß für eine an der Lagerstelle angreifende Kraft ist, wobei die Sensoren als Dehnungsmessstreifen ausgebildet sind und weiterhin axial oder radial oder schräg zur Axial- und Radialrichtung an oder in dem Lagerbolzen angeordnet sind, wobei die Sensoren derart angeordnet sind, dass die Messrichtung des jeweiligen Sensors mit der Wirkungslinie der angreifenden Kraft übereinstimmt, und dass der Lagerbolzen die mehreren Sensoren in parallelen Ebenen oder an einer Stirnfläche des Messelements angeordnet aufweist, wobei eine der parallelen Ebenen oder die Stirnfläche mehrere zueinander verdreht oder orthogonal angeordnete Sensoren aufweist, und wobei mindestens ein Sensor auf einer Außenseite des zylindrischen Messelements angeordnet ist und eine Innenfläche des Hohlraums berührt.

Erfindungsgemäß sind verschiedene Varianten vorgesehen, die eine Anpassung der Anordnung der Sensoren an unterschiedliche Kraftrichtungen ermöglichen. Für jeden Anwendungsfall kann auf diese Weise eine optimale Position der Sensoren bestimmt werden.

Die Erfindung beruht auf der Erkenntnis, dass eine besonders zuverlässige Messung von Kräften, insbesondere von entlang einer Wirkungslinie angreifenden Kräften, möglich ist, indem ein zylindrisches Messelement mehrere Sensoren aufweist und in einem Hohlraum des Lagerbolzens so angeordnet ist, dass die mehreren Sensoren auf die gewünschte Messrichtung abgestimmt sind. Bei der gewünschten Messrichtung handelt es sich beim jeweiligen Sensor um die Wirkungslinie einer angreifenden Kraft. Bei der erfindungsgemäßen Dreipunktaufhängung kann ein Sensor des Messelements direkt in dem Kraftpfad mit maximaler Belastung angeordnet sein. Dieser befindet sich auf der Wirkungslinie der angreifenden Kraft. Es ist daher ausreichend, eine während des Betriebs in einer bestimmten Richtung angreifende Kraft zumindest näherungsweise zu kennen, um daraus Kraftkomponenten abzuleiten. Beispielsweise kann eine angreifende Kraft in einen radialen Anteil und einen axialen Anteil zerlegt werden.

Die mehreren Sensoren, die bei dem Lagerbolzen der erfindungsgemäßen Dreipunktaufhängung verwendet werden, sind als Dehnungsmessstreifen (DMS) ausgebildet und axial oder radial oder schräg zur Axial- und Radialrichtung an oder in dem Lagerbolzen angeordnet. Die mehreren Sensoren sind in parallelen Ebenen oder an einer Stirnfläche des Messelements angeordnet. Dabei weist eine der parallelen Ebenen oder die Stirnfläche mehrere zueinander verdreht oder orthogonal angeordnete Sensoren auf. So ist beispielsweise ein weiterer Sensor um 90° gedreht zu einem ersten Sensor angeordnet. Bei dieser Ausgestaltung befinden sich beide Sensoren auf derselben Ebene, wobei die beiden Sensoren um 90° zueinander gedreht angeordnet sind. Eine derartige Anordnung ermöglicht eine Temperaturkompensation eines Sensors, insbesondere eines Dehnungsmessstreifens. Durch die Sensoranordnung kann die Winkellage der Wirkungslinie der angreifenden Kraft in Bezug auf eine Bezugsrichtung oder eine Bezugsebene bestimmt werden. Auf diese Weise kann nicht nur der Betrag einer Kraft, sondern auch deren Richtung erfasst werden. Es befindet sich dabei mindestens ein Sensor auf der Außenseite des zylindrischen Messelements und berührt eine Innenfläche des Hohlraums.

In einer bevorzugten Weiterbildung der Dreipunktaufhängung weist das Messelement insgesamt vier eine Messbrücke bildende Sensoren auf. Das zylinderförmige Messelement kann an oder in dem Hohlraum des Lagerbolzens der erfindungsgemäßen Dreipunktaufhängung eine vier Sensoren umfassende Messbrücke aufweisen. Derartige Messbrücken, die auch als Vollbrücken bezeichnet werden, ermöglichen eine besonders genaue Erfassung einer Dehnung anhand von Widerstandsänderungen. Diese Dehnung ist proportional zu der einwirkenden Kraft, die die Dehnung verursacht. Sofern zusätzlich eine Querschnittsfläche berücksichtigt wird, auf der die Kraft wirkt, kann eine auf den Lagerbolzen wirkende Spannung berechnet werden.

Eine besonders bevorzugte Weiterbildung des erfindungsgemäßen Bauteils sieht vor, dass wenigstens einer der Sensoren an oder auf einer abgeschrägten Fläche angeordnet ist, die zur Wirkungslinie der angreifenden Kraft ausgerichtet ist. Besonders bevorzugt wird es dabei, dass die abgeschrägte Fläche parallel zur Wirkungslinie der Kraft ausgerichtet ist oder dass die Wirkungslinie entlang der abgeschrägten Fläche verläuft. Auf diese Weise kann eine besonders exakte Messung einer Dehnung entlang der Wirkungslinie erfolgen. Mittels des bekannten Elastizitätsmoduls des Werkstoffs des Lagerbolzens kann anhand der erfassten Dehnung die angreifende Kraft bestimmt werden. Typischerweise besteht der Lagerbolzen aus einer Stahllegierung.

In einer weiteren Ausführungsform ist das Messelement aus zwei Teilen gebildet, die gemeinsam das zylindrischen Messelement bilden. In diesem Zusammenhang kann es vorgesehen sein, dass das Messelement zweiteilig ausgebildet ist und ein erstes, die parallele Ebene aufweisendes Teil und ein zweites, dazu komplementäres Teil aufweist. Weitere Sensoren können zwischen den beiden Teilen angeordnet sein. Auch bei dieser Ausgestaltung sind unterschiedliche Kombinationen verschiedener Messebenen und Sensoren möglich, um eine separate Erfassung von Kraftkomponenten bzw. eine gewünschte Trennung von Kraftkomponenten zu ermöglichen. Das Messelement, das das erste und das zweite Teil aufweist, kann in der Mitte, entlang einer Symmetrieebene geteilt sein, so dass die weiteren Sensoren mittig angeordnet sind. Andererseits kann der Lagerbolzen auch exzentrisch geteilt sein, sodass ein Teil größer ist als das andere Teil. Bei dieser Ausgestaltung werden die weiteren Sensoren außermittig orthogonal belastet.

Eine weitere Variante der erfindungsgemäßen Dreipunktanordnung sieht vor, dass das Messelement mit einem Aktor gekoppelt ist, der dazu ausgebildet ist, das Messelement um seine Längsachse zu drehen oder entlang seiner Längsachse zu verschieben. Vorzugsweise steht das Messelement mit einem Aktor in Verbindung, sodass das Messelement rotatorisch oder translatorisch bewegt werden kann Indem ein Bewegungsbereich des jeweiligen Sensors durchfahren wird, kann diejenige Position ermittelt werden, in der das Sensorsignal maximal ist, wodurch die Wirkungslinie der angreifenden Kraft bestimmt werden kann.

In einer bevorzugten Ausführungsform der Dreipunktaufhängung weist eine einem Oberlenker zugeordnete Lagerstelle und/oder eine einem Unterlenker zugeordnete Lagerstelle den Lagerbolzen auf. Vorzugsweise weisen die dem Oberlenker zugeordnete Lagerstelle als auch zwei dem Unterlenker zugeordnete Lagerstellen jeweils einen Lagerbolzen auf.

Die Erfindung wird nachfolgend anhand von Ausführungsbeispielen unter Bezugnahme auf die Zeichnungen erläutert. Die Zeichnungen sind schematische Darstellungen und zeigen:
- Figur 1: eine erfindungsgemäße Dreipunktaufhängung in einer perspektivischen Ansicht;
- Figur 2: eine Lagerstelle einer Dreipunktaufhängung in einer geschnittenen Ansicht;
- Figur 3: ein Ausführungsbeispiel eines Messelements für eine nicht erfindungsgemäße Dreipunktaufhängung, das in einen Lagerbolzen einsetzbar ist;
- Figur 4: ein Ausführungsbeispiel eines Messelements, das in einen Lagerbolzen einsetzbar ist; und
- Figur 5-15: weitere Ausführungsbeispiele von in einen Lagerbolzen einsetzbaren Messelementen.

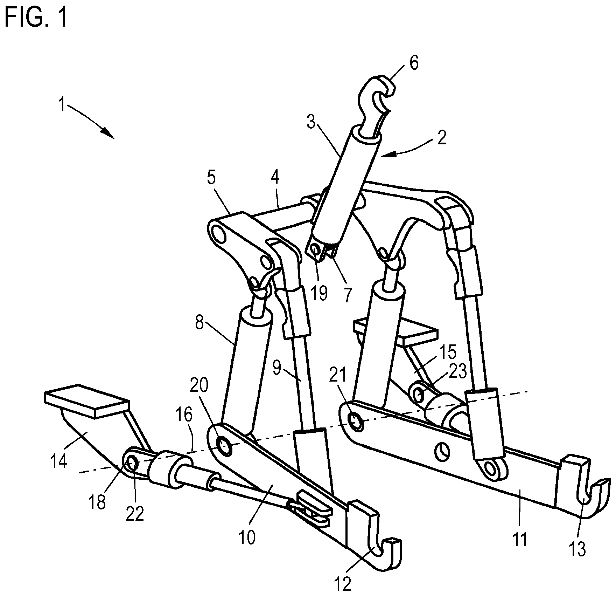

Figur 1 zeigt eine Dreipunktaufhängung 1 in einer perspektivischen Ansicht, umfassend einen Oberlenker 2 mit einem Hubzylinder 3. Der Hubzylinder 3 ist an einer Querstrebe 4 eines Hubarms 5 angebracht. An beiden Seiten des Hubarms 5 sind jeweils ein Hubzylinder 8 und eine höhenverstellbare Hubstange 9 angebracht. Sowohl der Hubzylinder 8 als auch die Hubstange 9 sind jeweils mit einem Unterlenker 10, 11 verbunden, an deren Ende sich jeweils ein Fanghaken 12, 13 befindet. Jedem Unterlenker 10, 11 ist eine Stütze 14, 15 zugeordnet, die am Heck eines Traktors (nicht gezeigt) befestigt ist.

Die an den Unterlenkern 10, 11 angeordneten Fanghaken 12, 13 bilden die unteren Punkte der Dreipunktaufhängung 1. Der an dem Oberlenker 2 angebrachte Fanghaken 6 bildet den oberen Punkt der Dreipunktaufhängung 1. Mittels der Fanghaken 6, 12, 13 kann ein Anbaugerät angekoppelt werden. Durch eine Betätigung der Hubzylinder 8 können die beiden Unterlenker 10, 11 angehoben und um eine Drehachse 16 geschwenkt werden. Die Drehachse 16 ist in Figur 1 schematisch als strichpunktierte Linie eingezeichnet. Durch eine Betätigung des Hubzylinders 3 des Oberlenkers 2 kann die Neigung eines an die Dreipunktaufhängung 1 angekoppelten Anbaugeräts verändert werden.

Die in Figur 1 gezeigte Dreipunktaufhängung 1 weist mehrere Lagerstellen auf, an denen zwei Komponenten gelenkig miteinander verbunden sind, wodurch die beschriebene Kinematik ermöglicht wird. Im Einzelnen befindet sich eine erste Lagerstelle an einem Gelenk 7 des Oberlenkers 2. Das Gelenk 7 verbindet den Hubzylinder 3 mit dem Traktor (nicht gezeigt). Weitere Lagerstellen koppeln das untere Ende der Hubzylinder 8 mit den Unterlenkern 10, 11. Daneben weisen auch die beiden seitlichen Stützen 14, 15 jeweils eine gelenkige Lagerstelle 18 auf. An allen erwähnten Lagerstellen ist ein Lagerbolzen angeordnet, der einen Sensor aufweist, der zum Erfassen einer Kraft ausgebildet ist. Somit befindet sich ein erster Lagerbolzen 19 im Bereich des Gelenks 7 am unteren Ende des Oberlenkers 2. Die beiden Unterlenker 10, 11 sind mittels Lagerbolzen 20, 21 mit dem jeweiligen Hubzylinder 8 gekoppelt. Zusätzlich weist jede Stütze 14, 15 die zur seitlichen Abstützung dient, einen Lagerbolzen 22, 23 auf. Jeder Lagerbolzen 19, 20, 21, 22, 23 ist über elektrische Leitungen (nicht dargestellt) mit einer Auswerteeinheit verbunden. Mittels der Lagerbolzen 19-23 ist es möglich, die an den einzelnen Lagerstellen wirkenden Kräfte zu erfassen und daraufhin die Dreipunktaufhängung, insbesondere deren Hubzylinder 3, 8, gezielt anzusteuern. Somit kann das Bewegen eines angehängten Arbeitsgeräts gezielt in Abhängigkeit der wirkenden Kräfte erfolgen.

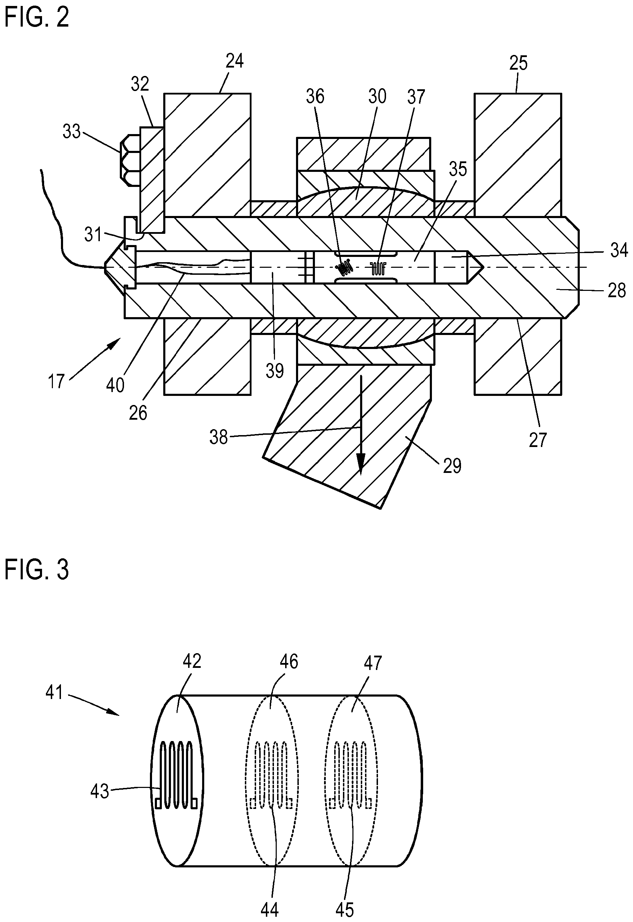

Figur 2 zeigt eine schematische Ansicht einer Lagerstelle 17 einer Dreipunktaufhängung. Die Lagerstelle 17 umfasst zwei voneinander beabstandete Lagerböcke 24, 25 als Bestandteil einer Dreipunktaufhängung, die fest an einem Traktor angeordnet sind. Die beiden Lagerböcke 24, 25 weisen fluchtende Bohrungen 26, 27 auf, deren Verbindungslinie eine Drehachse definiert. Ein Lagerbolzen 28 durchsetzt die Bohrungen 26, 27. Der Lagerbolzen 28 verbindet einen Arm 29 eines Anbaugeräts mit den Lagerböcken 24, 25, wodurch ein Schwenklager gebildet wird. Dazu durchsetzt der zylindrische Lagerbolzen 28 ein Gleitlager 30 des Arms 29. An einem Ende weist der Lagerbolzen 28 eine radiale Ausnehmung 31 auf, in die eine Platte 32, die durch eine Schraube 33 gesichert ist, eingreift. Die Schraube 33 ist mit dem Lagerbock 24 verschraubt und verhindert ein Lösen des Lagerbolzens 28. Der Lagerbolzen 28 ist in dem dargestellten Ausführungsbeispiel in die Bohrungen 26, 27 eingepresst. Es sind jedoch auch andere Ausführungen denkbar, bei denen der Lagerbolzen eingeschraubt, eingeschrumpft, eingenietet, eingeklebt oder eingeschweißt ist. In der geschnittenen Ansicht von Figur 2 erkennt man, dass der Lagerbolzen 28 teilweise hohl ausgebildet ist. In einem Hohlraum 34 ist ein Messelement 35 angeordnet, das Sensoren 36, 37 aufweist. In dem dargestellten Ausführungsbeispiel handelt es sich bei den Sensoren 36, 37 um Dehnungsmessstreifen, die zueinander verdreht angeordnet sind. Das Messelement 35 ist in diesem Ausführungsbeispiel als Zylinder ausgebildet, die Sensoren 36, 37 befinden sich somit auf der Außenseite des zylindrischen Messelements 35 und berühren die Innenfläche des Hohlraums 34. Daher kann eine in Richtung des Pfeils 38 wirkende Kraft, die somit senkrecht zum Lagerbolzen 28 gerichtet ist, mittels des die Sensoren 36, 37 aufweisenden Messelements 35 erfasst werden.

Das Messelement 35 und dessen Sensoren 36, 37 sind an ein Elektronikmodul 39 angeschlossen, das zur Signalwandlung dient. Über elektrische Leitungen 40 ist das Messelement 35 mit einer Auswerteeinheit (nicht gezeigt) verbunden.

Das in Figur 2 gezeigte Messelement 35, das in das Innere des Lagerbolzens 28 integriert ist, ist ein Beispiel für die Positionierung von Sensoren in einem Lagerbolzen. Nachfolgend werden weitere Ausführungsbeispiele für Lagerbolzen beschrieben, bei denen die Sensoren an unterschiedlichen Stellen und in unterschiedlicher Anordnung an oder in dem Lagerbolzen angeordnet sind.

Alle Lagerbolzen weisen die Gemeinsamkeit auf, dass der Lagerbolzen eine zylindrische Grundform aufweist, wobei der zylindrische Lagerbolzen einen Hohlraum aufweist. In diesem Hohlraum ist jeweils ein Messelement mit mehreren Sensoren untergebracht. Durch die Wahl eines passenden Messelements mit einer bestimmten Anordnung von Sensoren kann für jede Messaufgabe ein passender Lagerbolzen bereitgestellt werden.

Figur 3 ist ein Ausführungsbeispiel eines Messelements 41 für eine nicht erfindungsgemäße Dreipunktaufhängung, das als zylinderförmiger Bolzen ausgebildet ist. Im montierten Zustand ist das Messelement 41 in den Hohlraum eines Lagerbolzens eingesetzt. An einer axialen Stirnfläche 42 des Messelements 41 ist ein als Dehnungsmessstreifen ausgebildeter Sensor 43 angebracht. Zusätzlich weist das Messelement 41 zwei weitere Sensoren 44, 45 auf, die im Inneren des Messelements 41 auf zu der Stirnfläche 42 parallelen Ebenen 46, 47 angeordnet sind. Sämtliche Sensoren 43, 44, 45 sind mit Kabeln oder Leitungen verbunden, die in Figur 3 aus Gründen der besseren Übersichtlichkeit nicht dargestellt sind. Die in den mehreren zueinander parallelen Ebenen 42, 46, 47 angeordneten, als Dehnungsmessstreifen ausgebildeten Sensoren 43, 44, 45 sind dazu geeignet, eine Wirkungslinie einer an dem Lagerbolzen angreifenden Kraft zu erfassen. Das Messelement 41 kann beispielsweise in den Lagerbolzen 28 von Figur 2 eingesetzt sein. Somit kann nicht nur der Betrag der auf den Lagerbolzen einwirkenden Kraft, sondern auch deren Richtung erfasst und unterschieden werden. Optional kann auch die in Figur 3 verdeckte, hintere Stirnfläche des Messelements 41 einen oder mehrere Sensoren aufweisen.

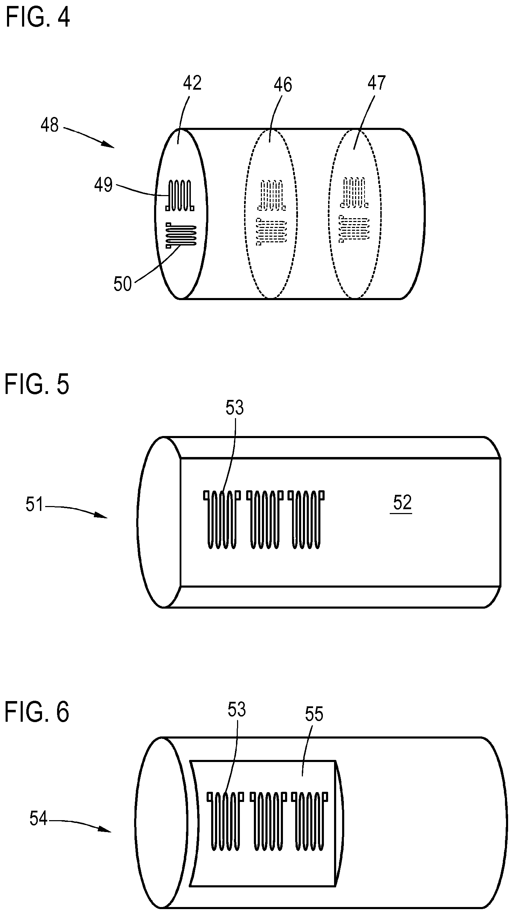

Figur 4 ist ein Ausführungsbeispiel eines Messelements 48, das ähnlich wie das Ausführungsbeispiel von Figur 3 mehrere Ebenen 42, 46, 47 aufweist, wobei Sensoren auf der Stirnfläche 42 und den inneren parallelen Ebenen 46, 47 angebracht sind. Auf den Ebenen sind jeweils zwei als Dehnungsmessstreifen (DMS) ausgebildete Sensoren 49, 50 angeordnet, wobei die beiden Sensoren sich in derselben Ebene befinden und um 90° zueinander gedreht angeordnet sind.

Figur 5 ist ein Ausführungsbeispiel eines Messelements 51 für eine nicht erfindungsgemäße Dreipunktaufhängung, das eine Ebene 52 aufweist, auf der mehrere Sensoren 53 in Axialrichtung nebeneinander angeordnet sind. Das in Figur 5 gezeigte Messelement ist dazu geeignet, die Wirkungslinie einer angreifenden Kraft zu erfassen, wodurch nicht nur der Betrag der Belastung eines Bauteils, insbesondere des Lagerbolzens der Dreipunktaufhängung, sondern auch die Richtung der Kraft erfasst und unterschieden werden kann. Bei anderen Ausführungen eines Messelements kann sich die Ebene auch lediglich über einen Teil der Länge des Messelements erstrecken.

Figur 6 ist ein weiteres Ausführungsbeispiel eines Messelements 54 für eine nicht erfindungsgemäße Dreipunktaufhängung, das eine Ebene 55 aufweist, auf der mehrere Sensoren 53 in Axialrichtung nebeneinander angeordnet sind. Die in Figur 6 gezeigte Anordnung ist dazu geeignet, die Wirkungslinie einer angreifenden Kraft zu erfassen, wodurch nicht nur der Betrag der Belastung eines Bauteils, insbesondere eines Lagerbolzens einer Dreipunktaufhängung, sondern auch deren Richtung erfasst und unterschieden werden kann. Bei anderen Ausführungen kann sich die Ebene auch lediglich über einen Teil der Länge des Messelements erstrecken.

Figur 6 ist eine ähnliche Darstellung wie Figur 5 und zeigt ein Messelement 54 für eine nicht erfindungsgemäße Dreipunktaufhängung, bei dem eine Ebene 55, auf der die Sensoren 53 angeordnet sind, sich lediglich über einen Abschnitt des Messelements 54 in Axialrichtung erstreckt.

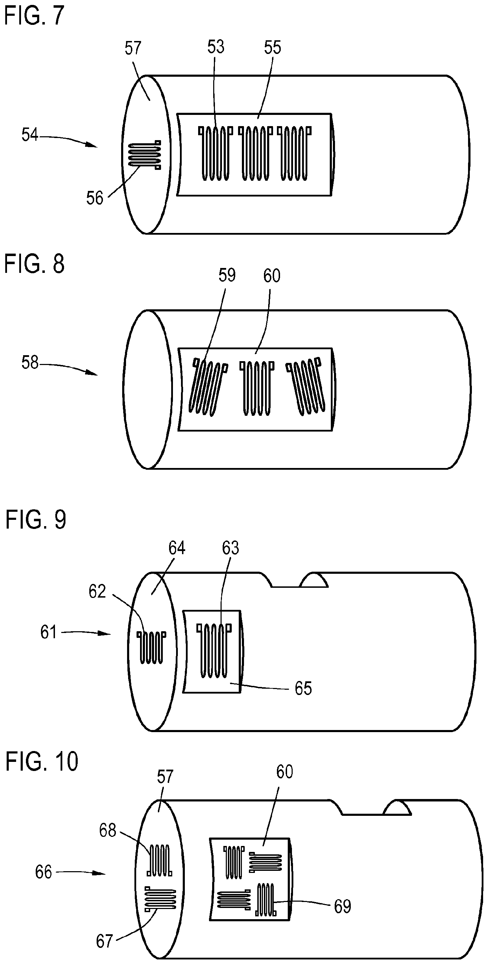

In ähnlicher Weise zeigt Figur 7 das Messelement 54 von Figur 6 für eine nicht erfindungsgemäße Dreipunktaufhängung, das zusätzlich zu den Sensoren 53 auf der Ebene 55 einen Sensor 56 auf einer axialen Stirnfläche 57 aufweist.

Figur 8 zeigt ein ähnliches Ausführungsbeispiel eines Messelements 58 für eine nicht erfindungsgemäße Dreipunktaufhängung, bei dem die Sensoren 59 im Inneren des Messelements 58 auf einer Ebene 60 angeordnet sind. Bezogen auf den mittleren Sensor ist der linke Sensor im Uhrzeigersinn gedreht angeordnet, der rechte Sensor ist gegen den Uhrzeigersinn gedreht auf der Ebene 60 angeordnet. Auf diese Weise können Ausrichtung und Position der Sensoren 59 an die Wirkungslinie einer angreifenden Kraft angepasst werden. Die Sensoren bzw. eine gedachte Symmetrielinie der Sensoren ist bei dem Ausführungsbeispiel von Figur 8 an unterschiedliche, in der Praxis auftretende Wirkungslinien angepasst, so dass die Wirkungslinie einer Kraft bei einer Belastung jeweils einen der Sensoren 59 schneidet.

Figur 9 ist ein Ausführungsbeispiel eines Messelements 61 für eine nicht erfindungsgemäße Dreipunktaufhängung, bei dem zwei Sensoren 62, 63 auf zwei zueinander um 90° gedrehten Ebenen 64, 65 angeordnet sind.

Figur 10 ist ein Ausführungsbeispiel eines Messelements 66, bei dem auf der Stirnfläche 57 zwei um 90° zueinander versetzte Sensoren 67, 68 angeordnet sind. Zusätzlich sind auf der inneren Ebene 60 insgesamt vier Sensoren 69 in zwei Reihen und zwei Spalten angeordnet, wobei benachbarte Sensoren um 90° zueinander versetzt sind. Je nach Verschaltung können mit den Sensoren 69 Störungen wie Temperatureinflüsse kompensiert oder Lastrichtungen unterschieden werden.

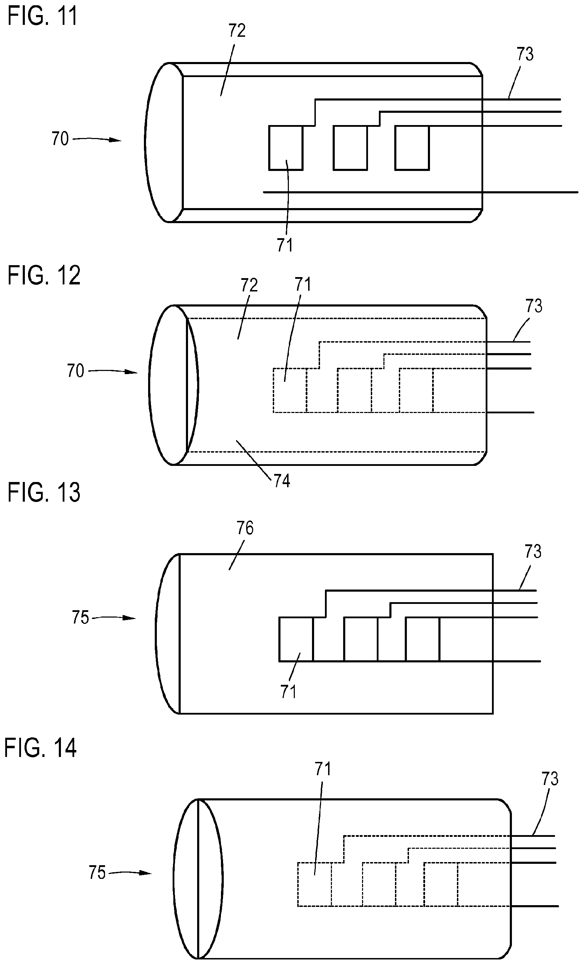

Figur 11 ist ein Ausführungsbeispiel eines Messelements 70 für eine nicht erfindungsgemäße Dreipunktaufhängung, das Sensoren 71 aufweist, die im montierten Zustand durch eine orthogonal zu den Sensoren 71 wirkende Druckkraft beaufschlagt werden. Die Sensoren 71 sind auf einer Ebene 72 im Inneren des Messelements 70 angeordnet. Den Sensoren 71 sind dabei elektrische Leitungen 73 für die Messwerterfassung zugeordnet.

Figur 12 ist eine ähnliche Darstellung und zeigt das Messelement 70 für eine nicht erfindungsgemäße Dreipunktaufhängung, das zusätzlich einen zweiten Teil 74 aufweist, der komplementär zu dem ersten, in Figur 11 gezeigten Teil ausgebildet ist, so dass die beiden Teile gemeinsam das zylindrische Messelement 70 bilden, das in einen Lagerbolzen, der einen Hohlraum aufweist, beispielsweise der in Figur 2 gezeigte Lagerbolzen 28, einsetzbar ist.

Figur 13 ist eine ähnliche Darstellung wie Figur 11 und zeigt ein Messelement 75 für eine nicht erfindungsgemäße Dreipunktaufhängung, bei dem eine Trennebene durch eine (gedachte) Mittelebene verläuft. Der zweite Teil des Messelements 75 ist somit identisch zu dem in Figur 13 gezeigten ersten Teil ausgebildet, die beiden Teile des Messelements 75 sind somit als Halbzylinder ausgebildet.

Figur 14 zeigt analog zu Figur 12 die zwischen den beiden Teilen des Messelements 75 angeordneten Sensoren 71 für eine nicht erfindungsgemäße Dreipunktaufhängung.

Bei dem Bauteil, das eines der beschriebenen Messelemente aufweist, kann die Messebene, das heißt die Ebene, in der sich die mehreren Sensoren in Form von Dehnungsmessstreifen, befinden, nachgeführt werden, um eine Information über die Wirkungslinie einer angreifenden Kraft zu erhalten. Dazu wird der die Dehnung erfassende Sensor in die Position bewegt, in der das Messsignal maximal ist. Die sich dabei einstellende Lage des Messelements ist ein Maß für die Wirkungslinie der angreifenden Kraft. Das Messelement ist dazu mit einem Aktor gekoppelt, der dazu ausgebildet ist, das Messelement um seine Längsachse zu drehen oder entlang seiner Längsachse zu verschieben.

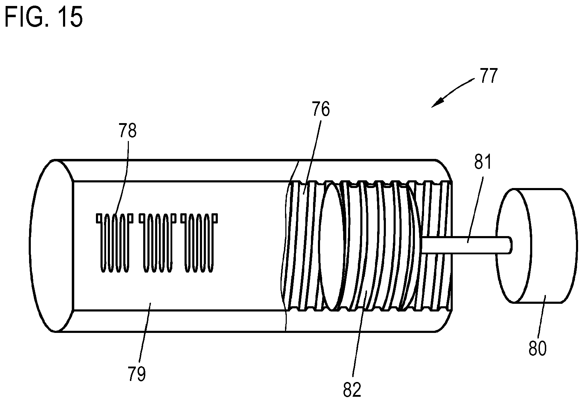

Figur 15 zeigt ein Messelement 77 mit Sensoren 78, die auf einer Ebene 79 angebracht sind für eine nicht erfindungsgemäße Dreipunktaufhängung Ein als Antrieb ausgebildeter Aktor 80, der für eine erfindungsgemäße Dreipunktaufhängung zum Einsatz kommen kann und als Elektromotor ausgebildet ist, ist über eine Welle 81 mit einer Spindel 82 verbunden. Die Spindel 82 kämmt mit einem daran angepassten Innengewinde 76 des Messelements 77. Mittels einer entsprechenden Steuerung (nicht gezeigt) wird das Messelement 77 jeweils mittels des Antriebs 80 in diejenige Position verschoben, bei der das von den Sensoren 78 gelieferte Messsignal maximal ist. Die Position des Messelements 77 bezogen auf einen Ausgangszustand ist dann ein Maß für die Wirkungslinie einer angreifenden Kraft. Das Messelement 77 kann in Längsrichtung verschoben werden. Es sind auch andere Ausführungen möglich, bei denen das Messelement um seine Längsachse drehbar ist.

### Bezugszeichenliste

1 Dreipunktaufhängung
2 Oberlenker
3 Hubzylinder
4 Querstrebe
5 Hubarm
6 Fanghaken
7 Gelenk
8 Hubzylinder
9 Hubstange
10 Unterlenker
11 Unterlenker
12 Fanghaken
13 Fanghaken
14 Stütze
15 Stütze
16 Drehachse
17 Lagerstelle
18 Lagerstelle
19 Lagerbolzen
20 Lagerbolzen
21 Lagerbolzen
22 Lagerbolzen
23 Lagerbolzen
24 Lagerbock
25 Lagerbock
26 Bohrung
27 Bohrung
28 Lagerbolzen
29 Arm
30 Gleitlager
31 Ausnehmung
32 Platte
33 Schraube
34 Hohlraum
35 Messelement
36 Sensor
37 Sensor
38 Pfeil
39 Elektronikmodul
40 Leitung
41 Messelement
42 Stirnfläche
43 Sensor
44 Sensor
45 Sensor
46 Ebene
47 Ebene
48 Messelement
49 Sensor
50 Sensor
51 Messelement
52 Ebene
53 Sensor
54 Messelement
55 Ebene
56 Sensor
57 Stirnfläche
58 Messelement
59 Sensor
60 Ebene
61 Messelement
62 Sensor
63 Sensor
64 Ebene
65 Ebene
66 Messelement
67 Sensor
68 Sensor
69 Sensor
70 Messelement
71 Sensor
72 Ebene
73 Leitung
74 zweiter Teil
75 Messelement
76 Innengewinde
77 Messelement
78 Sensor
79 Ebene
80 Aktor
81 Welle
82 Spindel

## Patentansprüche

1. Dreipunktaufhängung (1), insbesondere für einen Traktor, eine fahrbare Arbeitsmaschine, eine Baumaschine, einen Kran oder dergleichen, die zum Ankuppeln eines Anbaugeräts ausgebildet ist und wenigstens eine Lagerstelle (17, 18) mit einem Lagerbolzen (19, 20, 21, 22, 23, 28) in Form eines zylindrischen Bolzens umfassend einen Hohlraum (34) und mit einem in dem Hohlraum (34) angeordneten zylindrischen Messelement (35, 48, 66), das mehrere Sensoren (36, 37, 49, 50, 67, 68) aufweist, dessen Sensorsignal ein Maß für eine an der Lagerstelle (17, 18) angreifende Kraft ist, wobei die Sensoren (36, 37, 49, 50, 67, 68) als Dehnungsmessstreifen ausgebildet sind und weiterhin axial oder radial oder schräg zur Axial- und Radialrichtung an oder in dem Lagerbolzen (19, 20, 21, 22, 23, 28) angeordnet sind, wobei die Sensoren (36, 37, 49, 50, 67, 68) derart angeordnet sind, dass die Messrichtung des jeweiligen Sensors (36, 37, 49, 50, 67, 68) mit der Wirkungslinie der angreifenden Kraft übereinstimmt, und dass der Lagerbolzen (19, 20, 21, 22, 23, 28) die mehreren Sensoren (36, 37, 49, 50, 67, 68) in parallelen Ebenen (46, 47) oder an einer Stirnfläche (42, 57) des Messelements (35, 48, 66) angeordnet aufweist, wobei eine der parallelen Ebenen (46, 47) oder die Stirnfläche (42, 57) mehrere zueinander verdreht oder orthogonal angeordnete Sensoren (36, 37, 49, 50, 67, 68) aufweist, und wobei mindestens ein Sensor (36, 37) auf einer Außenseite des zylindrischen Messelements (35, 48, 66) angeordnet ist und eine Innenfläche des Hohlraums (34) berührt.

2. Dreipunktaufhängung nach Anspruch 1, **dadurch gekennzeichnet, dass** das Messelement (66) insgesamt vier eine Messbrücke bildende Sensoren aufweist.

3. Dreipunktaufhängung nach Anspruch 1, **dadurch gekennzeichnet, dass** wenigstens einer der Sensoren (36, 37, 49, 50, 67, 68) an oder auf einer abgeschrägten Fläche angeordnet ist, die zur Wirkungslinie der angreifenden Kraft ausgerichtet ist.

4. Dreipunktaufhängung nach einem der vorangehenden Ansprüche, **dadurch gekennzeichnet, dass** das Messelement (70) aus zwei Teilen gebildet ist, die gemeinsam das zylindrischen Messelement (70) bilden.

5. Dreipunktaufhängung nach einem der vorangehenden Ansprüche, **dadurch gekennzeichnet, dass** das Messelement (77) mit einem Aktor (80) gekoppelt ist, der dazu ausgebildet ist, das Messelement (77) um seine Längsachse zu drehen oder entlang seiner Längsachse zu verschieben.

6. Dreipunktaufhängung nach einem der vorangehenden Ansprüche, **dadurch gekennzeichnet, dass** eine einem Oberlenker (2) zugeordnete Lagerstelle und/oder eine einem Unterlenker (10, 11) zugeordnete Lagerstelle (18) den Lagerbolzen (19, 20, 21) aufweist.

7. Dreipunktaufhängung nach Anspruch 6, **dadurch gekennzeichnet, dass** sowohl die dem Oberlenker (2) zugeordnete Lagerstelle als auch zwei dem Unterlenker (10, 11) zugeordnete Lagerstellen (18) jeweils einen Lagerbolzen (20, 21) aufweisen.

## Claims

1. A three-point linkage (1), in particular for a tractor, a drivable work machine, a construction machine, a crane or the like, which is designed for coupling of an attachment apparatus and has at least one bearing point (17, 18) having a bearing bolt (19, 20, 21, 22, 23, 28) in the form of a cylindrical bolt comprising a cavity (34) and with a cylindrical measurement element (35, 48, 66) arranged in the cavity (34), having a plurality of sensors (36, 37, 49, 50, 67, 68), the sensor signal of which is a measure of a force acting on the bearing point (17, 18), wherein the sensors (36, 37, 49, 50, 67, 68) are formed as strain gauges and are further arranged axially or radially or obliquely with respect to the axial and radial direction on or in the bearing bolt (19, 20, 21, 22, 23, 28), wherein the sensors (36, 37, 49, 50, 67, 68) are arranged such that the measuring direction of the respective sensor (36, 37, 49, 50, 67, 68) coincides with the line of action of the applied force, and in that the bearing bolt (19, 20, 21, 22, 23, 28) has the plurality of sensors (36, 37, 49, 50, 67, 68) arranged in parallel planes (46, 47) or on an end face (42, 57) of the measuring element (35, 48, 66), wherein one of the parallel planes (46, 47) or the end face (42, 57) has a plurality of sensors (36, 37, 49, 50, 67, 68) arranged rotated or orthogonal to one another, and wherein at least one sensor (36, 37) is arranged on an outer side of the cylindrical measurement element (35, 48, 66) and contacts an inner surface of the cavity (34).

2. The three-point linkage according to claim 1, **characterised in that** the measurement element (66) has a total of four sensors forming a measurement bridge.

3. The three-point linkage according to claim 1, **characterised in that** at least one of the sensors (36, 37, 49, 50, 67, 68) is arranged on a bevelled surface that is aligned with the line of action of the applied force.

4. The three-point linkage according to any one of the previous claims, **characterised in that** the measurement element (70) if formed from two parts that together form the cylindrical measurement element (70).

5. The three-point linkage according to any one of the previous claims, **characterised in that** the measurement element (77) is coupled to an actuator (80) that is designed to rotate the measurement element (77) about its longitudinal axis or to move it along its longitudinal axis.

6. The three-point linkage according to any one of the previous claims, **characterised in that** a bearing point associated with an upper link (2) and/or a bearing point (18) associated with a lower link (10, 11) has the bearing bolt (19, 20, 21).

7. The three-point linkage according to claim 6, **characterised in that** both the bearing point associated with the upper link (2) and two bearing points (18) associated with the lower link (10, 11) each have bearing bolt (20, 21).

## Revendications

1. Attelage trois points (1), destiné notamment à un tracteur, un engin de travail mobile, un engin de chantier, une grue ou similaire, qui est conçu pour atteler un matériel porté et comporte au moins un point d'appui (17, 18) pourvu d'un axe de palier (19, 20, 21, 22, 23, 28) en forme d'un boulon cylindrique comprenant une cavité (34) et un élément de mesure cylindrique (35, 48, 66) disposé dans la cavité (34), lequel comporte de multiples capteurs (36, 37, 49, 50, 67, 68), dont le signal de capteur donne une indication d'une force venant s'appliquer sur le point d'appui (17, 18), les capteurs (36, 37, 49, 50, 67, 68) étant conçus comme jauge de contrainte et étant en outre disposés axialement ou radialement ou obliquement par rapport à la direction radiale et axiale sur ou dans l'axe de palier (19, 20, 21, 22, 23, 28), les capteurs (36, 37, 49, 50, 67, 68) étant disposés de manière à ce que la direction de mesure de chaque capteur (36, 37, 49, 50, 67, 68) coïncide avec la ligne d'action de la force appliquée et que l'axe de palier (19, 20, 21, 22, 23, 28) comporte les multiples capteurs (36, 37, 49, 50, 67, 68) disposés dans des plans parallèles (46, 47) ou sur une face avant (42, 57) de l'élément de mesure (35, 48, 66), l'un des plans parallèles (46, 47) ou la face avant (42, 57) comportant plusieurs capteurs (36, 37, 49, 50, 67, 68) tournés les uns par rapport aux autres ou disposés orthogonalement et au moins un capteur (36, 37) étant disposé sur un côté extérieur de l'élément de mesure cylindrique (35, 48, 66) et entrant en contact avec une surface intérieure de la cavité (34).

2. Attelage trois points selon la revendication 1, **caractérisé en ce que** l'élément de mesure (66) comporte au total quatre capteurs formant un pont de mesure.

3. Attelage trois points selon la revendication 1, **caractérisé en ce qu'**au moins l'un des capteurs (36, 37, 49, 50, 67, 68) est disposé sur ou au niveau d'une surface inclinée, qui est alignée à la ligne d'action de la force appliquée.

4. Attelage trois points selon l'une quelconque des revendications précédentes, **caractérisé en ce que** l'élément de mesure (70) est formé de deux parties qui forment ensemble l'élément de mesure cylindrique (70).

5. Attelage trois points selon l'une quelconque des revendications précédentes, **caractérisé en ce que** l'élément de mesure (77) est accouplé à un actionneur (80) qui est conçu pour faire tourner l'élément de mesure (77) autour de son axe longitudinal ou pour le faire coulisser le long de son axe longitudinal.

6. Attelage trois points selon l'une quelconque des revendications précédentes, **caractérisé en ce qu'un** point d'appui associé à un bras supérieur d'attelage (2) et/ou un point d'appui (18) associé à un bras inférieur d'attelage (10, 11) comporte l'axe de palier (19, 20, 21).

7. Attelage trois points selon la revendication 6, **caractérisé en ce que** non seulement le point d'appui associé au bras supérieur d'attelage (2) mais aussi deux points d'appui (18) associés au bras inférieur d'attelage (10, 11) comportent chacun un axe de palier (20, 21).
